# EUROPÄISCHE PATENTSCHRIFT

(11) **EP 2 776 348 B1**
(45) Veröffentlichungstag und Bekanntmachung des Hinweises auf die Patenterteilung: **10.02.2016**
(21) Anmeldenummer: 12786915.4
(22) Anmeldetag: 06.11.2012
(51) Int. Cl.: B65G 17/20

(54) **FÖRDERANLAGE MIT EINER FÖRDERKETTE UND TRAGSEGMENT FÜR EINEN FÖRDERTRÄGER EINER FÖRDERKETTE**
CONVEYOR SYSTEM WITH A CONVEYOR CHAIN, AND CARRYING SEGMENT FOR A CONVEYOR CARRIER OF A CONVEYOR CHAIN
SYSTÈME DE TRANSPORT COMPORTANT UNE CHAÎNE DE TRANSPORT ET SEGMENT DE SUPPORT DESTINÉ À UN SUPPORT DE TRANSPORT D'UNE CHAÎNE DE TRANSPORT.

(30) Priorität: 08.11.2011 DE 102011118303
(43) Veröffentlichungstag der Anmeldung: 17.09.2014
(73) Patentinhaber: SSI Schäfer Peem GmbH, 8051 Graz (AT)
(72) Erfinder: WINKLER, Max, 8010 Graz (AT)
(74) Vertreter: Witte, Weller & Partner Patentanwälte mbB
(86) Internationale Anmeldenummer: PCT/EP2012/071893
(87) Internationale Veröffentlichungsnummer: WO 2013/068327

(56) Entgegenhaltungen:
- EP-A1- 0 765 826
- EP-A2- 2 377 782
- DE-A1-102006 040 900

## Beschreibung

Die Erfindung betrifft ein Tragsegment für einen Förderträger einer Förderkette. Die Erfindung betrifft ferner einen Förderträger, eine Förderkette und eine Förderanlage, insbesondere eine Hängeförderanlage, mit einer solchen Förderkette.

Aus der DE 23 10 356 A ist ein Fördergestell für Kleidungsstücke mit einer in einer geschlossenen Bahn umlaufenden Fördereinrichtung bekannt. Aus der DE 20 2008 007 100 U1 ist eine Hängeförderanlage mit einer Führungsbahn und Warenträgern bekannt. Aus der DE 10 2006 040 900 A1 ist eine Einrichtung zur Behandlung von Kleidungsstücken bekannt, die eine Fördereinheit aufweist, mittels derer an Bügeln hängende Kleidungsstücke einer Behandlungskammer zuführbar sind, wobei die Fördereinheit gelenkig verbundene Zugstangen aufweist.
Aus EP 0 765 826 A1 ist eine Förderanlage bekannt, die einen Förderträger mit einer Vielzahl von einzelnen Förderelementen aufweist, wobei die Förderelemente aus zwei vertikal voneinander beabstandeten Strängen bestehen, wobei die oberen Stränge der Förderelemente jeweils über Gelenkkupplungen miteinander verbunden sind, und wobei die unteren Stränge der Förderelemente durch ein Hohlprofil gebildet werden und benachbarte Förderelemente über flexible Teilstücke verbindbar sind, die im Profil des einen Förderelements fest und in dem Profil des anderen benachbarten Förderelements lose gelagert sind.
Die EP 2 377 782 A2 entspricht dem Oberbegriff des Anspruchs 1 und zeigt einen Endlosförderer für ein Warenlagersystem, mit einer Endlosförderkette zur Mitnahme von Warenhalterungsmitteln zur Aufnahme von zu fördernden Waren, wobei die Warenhalterungsmittel Gestängeelemente und Brückenglieder aufweisen, wobei die Brückenglieder die Gestängeelemente zu einem zusammenhängenden und entlang der Endlosförderkette verlaufenden Halterungsgestänge gelenkig miteinander verbinden. Die Brückenglieder und die Gestängeelemente können mittels einer Langloch-Gelenkverbindung oder eines Achsdrehgelenkes verbunden sein. Das Achsdrehgelenk ist spielbehaftet, so dass sich einander benachbarte Gestängeelemente relativ zu dem sie verbindenden Brückenglied in eine abgewinkelte Stellung einstellen können.

Aus der DE 202 17 497 U1 ist eine Trageinrichtung für hängendes Fördergut bekannt, die eine Stange aufweist, an der Fördergüter aufgehängt werden können. Die Trageinrichtung weist ferner zwei sich an die Stange anschließende Schenkel auf, die an einer Laufschiene gelagert sind. Die Trageinrichtung weist ferner Puffer auf, um formschlüssig mit weiteren Trageinrichtungen gekoppelt zu werden.

Im Hause der Anmelderin ist ferner durch Benutzung bekannt geworden eine Förderanlage mit einer Förderkette mit zumindest zwei gekoppelten Förderträgern, an denen jeweils ein Leitersegment aufgenommen ist, das über zumindest zwei Vertikalstege am Förderträger befestigt ist. Das Leitersegment weist einen Auflagekörper auf, auf dem zwischen den Vertikalstegen Fördergüter aufgenommen werden können.

Derartige Förderanlagen eignen sich insbesondere für den Transport von an Bügeln hängenden Fördergütern, insbesondere von Bekleidungsstücken. Bei diesen Förderanlagen besteht grundsätzlich die Möglichkeit, einzelne Fördergüter in die Anlage einzuschleusen bzw. aus der Anlage auszuschleusen. Die Fördergüter können verfahren und mittels geeigneter Aufgabestationen und/oder Abgabestationen sortiert werden. Eine typische Anwendung kann etwa das Kommissionieren von Lieferungen in der Bekleidungsindustrie bzw. dem Textilgroßhandel umfassen. Ferner können derartige Förderanlagen etwa in Großwäschereien oder ähnlichen Einrichtungen genutzt werden.

Es hat sich gezeigt, dass derartige Förderanlagen häufig Bauraumrestriktionen unterliegen, die etwa einen komplex gestalteten Förderpfad umfassen können, insbesondere einen mehrdimensional gekrümmten Förderpfad. Eine Anpassung an derartige Randbedingungen hat häufig konstruktive Maßnahmen zur Folge, die die Leistungsfähigkeit bzw. die Ausfallsicherheit der Förderanlage nachteilig beeinflussen können.

Der Erfindung liegt die Aufgabe zugrunde, ein Tragsegment zur Aufnahme an einem Förderträger einer Förderanlage anzugeben, das besonders zur Aufnahme hängender Fördergüter geeignet ist und insbesondere auch beim Vorliegen gekrümmter Förderpfade einen fehlerarmen Transport der Fördergüter mit hoher Förderleistung erlaubt. Ferner sollen ein Förderträger mit einem derartigen Tragsegment, eine Förderkette sowie eine korrespondierende Förderanlage angegeben werden.

Diese Aufgabe wird erfindungsgemäß durch ein Tragsegment gemäß Anspruch 1 gelöst.

Die Aufgabe der Erfindung wird auf diese Weise vollkommen gelöst. Insbesondere in Kombination mit einer Verjüngung im Vorzugslagebereich, kann somit das aufgenommene Fördergut in einfacher Weise ausgerichtet werden. Die Vorzugsorientiefung kann etwa eine definierte Schrägstellung des Fördergutes umfassen.
In der Vorzugsorientierung können etwa Ausschleusungen oder Abgaben der Fördergüter vereinfacht werden. Ferner kann das Fördergut bzw. dessen Verbindungselement in der Vorzugsorientierung ein Identifikationselement in geeigneter Orientierung präsentieren, um eine Erfassung mittels einer Sensoreinrichtung zu erleichtern. Bei dem Identifikationselement kann es sich bspw. um einen RFID-Chip, einen Barcode oder Ähnliches handeln. Die geneigte Vorzugsorientierung kann einen stumpfen Winkel, vorzugsweise einen im Wesentlichen rechten Winkel, zwischen dem Identifikationselement und der Sensoreinrichtung ermöglichen.
Die gegenüber der Querrichtung geneigte Führungsfläche kann zumindest abschnittsweise ungefähr parallel zu einer Vertikalrichtung verlaufen.

Ferner ist nunmehr der gesamte Raum zwischen den einzigen Befestigungsstegen zweier aufeinanderfolgender Tragsegmente zur Aufnahme der Fördergüter nutzbar. Ein Totraum, der bei bekannten Ausgestaltungen konstruktiv erforderlich ist, um etwa Ausgleichsbewegungen zwischen den aufeinanderfolgenden Tragsegmenten zu ermöglichen, kann vermieden werden. Fehlerhafte Einschleusungen von Fördergütern in diesen Totraum entfallen, die Förderanlage kann insgesamt robuster ausgestaltet sein und eine geringere Fehleranfälligkeit aufweisen. Bei einer gegebenen Länge des einzigen Auflagefensters, die etwa erforderlich ist, um die Fördergüter bei einer gegebenen Geschwindigkeit der Förderträger sicher einzuschleusen und/oder ausschleusen zu können, kann eine von den Tragsegmenten beanspruchte Gesamtlänge insgesamt kleiner ausfallen. Nunmehr wird kein wesentlicher Totraum mehr verschwendet, nahezu die volle Gesamtlänge kann zur Auflage der Fördergüter genutzt werden. Die Leistungsfähigkeit bzw. Kapazität der Förderanlage, also etwa ein Durchsatz pro Zeiteinheit, kann gesteigert werden. Verglichen mit Leiterförderern, die Tragsegmente mit zwei oder mehr Befestigungsstegen aufweisen, ergibt sich eine deutlich höhere Produktivität.

Das einzige Auflagefenster kann etwa auch als Mitnahmefenster oder Handlingfenster bezeichnet werden. Das Aufnahmefenster beschreibt einen Bereich, der sich zwischen zwei gekoppelten Tragsegmenten ergibt, der für Einschleusungen und Ausschleusungen der Fördergüter genutzt werden kann. Im Bereich des Auflagefensters ist eine sichere Auflage für das Verbindungselement des hängenden Fördergutes gewährleistet.

Der Basiskörper des Tragsegments kann etwa als im Wesentlichen stabförmiger Basiskörper ausgebildet sein, bspw. mit einem Querschnitt in Form eines Rundprofils, eines Eckprofils oder dergleichen. Es ist bevorzugt, wenn am Basiskörper eine Auflagefläche ausgebildet ist, die in geeigneter Weise an das Verbindungselement des Fördergutes angepasst ist, um eine gute Anschmiegung zu gewährleisten.

In einfacher Weise kann der Ausgleichskörper ebenso als stabförmiger Ausgleichskörper ausgebildet sein. Es versteht sich, dass auch der Basiskörper des Tragsegments dazu ausgebildet sein kann, derart mit einem Ausgleichskörper eines weiteren Tragsegments gekoppelt zu werden, dass sich zwischen den jeweiligen Befestigungsstegen unter Einbeziehung des Ausgleichskörpers ein durchgängiges Auflagefenster ergibt. Auf diese Weise kann eine Reihe von Tragsegmenten oder eine Förderkette gebildet werden. Die Basiskörper der beiden miteinander gekoppelten Tragsegmente können in einfacher Weise eine Verliersicherung für den Ausgleichskörper bereitstellen.

Vorzugsweise weist das Tragsegment einen einzigen Ausgleichskörper auf. Der einzige Ausgleichskörper kann insbesondere einstückig gestaltet sein. Auf diese Weise kann eine sichere Verbindung mit einem Basiskörper eines weiteren Tragsegments mit minimalem Teileaufwand erfolgen.

Der Ausgleichskörper ist elastisch ausgeführt. Der Ausgleichskörper kann etwa aus elastomeren Werkstoffen, insbesondere aus einem thermoplastischen Elastomer bestehen. Auf diese Weise kann der Ausgleichskörper etwa als biegsames Gelenk fungieren, wenn sich eine Relativlage der beiden miteinander gekoppelten Tragsegmente beim Durchfahren der Förderanlage verändert.

Es ist anzumerken, dass sich demgemäß die Abmessungen des durchgängigen Auflagefensters beim Durchfahren der Förderanlage in bestimmten Grenzen ändern können.

Die EP 2 377 782 A2 schlägt hingegen vor, Warenhalterungsmittel mit sogenannten Brückengliedern und Gestängeelementen zu versehen, die mittels spielbehafteter Gelenke verbunden sind. Auf diese Weise sollen sich die Warenhalterungsmittel zum Durchfahren von Kurven eignen. Es hat sich jedoch gezeigt, dass eine derartige Gestaltung jedoch mit niedriger Laufruhe und hohen Laufgeräuschen einher gehen kann, da die spielbehafteten Gelenke zum Klappern neigen können. Diese Gestaltung eignet sich nur bedingt für Hochleistungsanwendungen, bei denen Förderträger mit hohen Geschwindigkeiten entlang des Förderpfads bewegt werden. Ferner erfordern die Gelenke eine Mehrzahl von Teilen sowie einen nicht zu vernachlässigenden Herstellungsaufwand bzw. Montageaufwand.

Die Tragsegmente eignen sich in besonderer Weise zur Aufnahme an Förderträgern, die Bestandteil eines Zugstangenförderers sind.

Gemäß einer weiteren Ausgestaltung ist am Basiskörper ferner eine Orientierungsnase vorgesehen, die in der Längsrichtung dem Befestigungssteg in einer Förderrichtung vorgelagert ist, wobei die Orientierungsnase und der Befestigungssteg einen Vorzugslagebereich für das zumindest eine Fördergut definieren, vorzugsweise weist die Orientierungsnase eine Leitfläche auf, die gegenüber der Längsrichtung geneigt ist.

Auf diese Weise kann das einzuschleusende Fördergut zunächst einfach in das vergleichsweise große Auflagefenster eingeschleust werden. Anschließend kann das aufgenommene Fördergut in den Vorzugslagebereich eingebracht werden. Dies kann etwa selbsttätig geschehen, bspw. beim Durchfahren einer Steigung, bei der das Fördergut von alleine in den Vorzugslagebereich rutschen kann. Es können jedoch bei der Förderanlage ebenso auch Einrichtungen vorgesehen sein, die das aufgenommene Fördergut definiert in den Vorzugslagebereich verbringen. Vorzugsweise ist hierzu eine Kulissenbahn vorgesehen, die etwa eine oder zwei Kufen umfasst, wobei die Kulissenbahn dazu ausgebildet ist, ein passierendes Verbindungselement relativ zum Basiskörper anzuheben und über die Orientierungsnase zu führen. Eine Mitnahme des Verbindungselements kann durch den Befestigungssteg erfolgen. Nach dem Durchlaufen der Kulissenbahn kann das Verbindungselement wieder relativ zum Basiskörper abgesenkt bzw. abgesetzt werden. Somit kann das Verbindungselement sicher in den Vorzugslagebereich überführt werden.

Es versteht sich, dass am Basiskörper alternativ auch zwei oder mehr in der Längsrichtung versetzte Orientierungsnasen vorgesehen sein können. Auf diese Weise kann eine Mehrzahl von Fördergütern definiert am Basiskörper aufgenommen werden.

Gemäß einer Weiterbildung weist der Basiskörper im Vorzugslagebereich eine Verjüngung auf, die insbesondere eine sich entgegen der Förderrichtung verjüngende Konusfläche umfasst.

Durch diese Maßnahme kann auch im Vorzugslagebereich eine Vorzugsstellung für das Verbindungselement des Fördergutes definiert werden. Die Konusfläche kann sich in Richtung des Befestigungssteges verjüngen. Somit kann das Fördergut entgegen der Förderrichtung am Befestigungssteg zur Anlage gelangen.

Die Konusfläche kann etwa einen runden, insbesondere kreisförmigen oder kreissegmentförmigen Querschnitt aufweisen. Die Konusfläche kann insbesondere in einem Bereich angeordnet sein, an dem das Verbindungselement aufliegen kann. Mit anderen Worten kann es genügen, die Konusfläche lediglich auf einer oberen Seite des Basiskörpers aufzubilden, die etwa dem Förderträger zugewandt ist.

Gemäß einer weiteren Ausgestaltung weist der Befestigungssteg zumindest eine obere Übergangsrippe und zumindest eine untere Übergangsrippe auf.

Die obere Übergangsrippe kann einen Übergang zwischen dem Befestigungssteg des Tragsegments und dem Förderträger verkörpern, an dem das Tragsegment aufgenommen ist. Die untere Übergangsrippe kann als Übergang zwischen dem Befestigungssteg und dem Basiskörper des Tragsegments ausgebildet sein. Die zumindest eine obere Übergangsrippe und die zumindest eine untere Übergangsrippe können einen Verbund zwischen dem Förderträger und dem daran aufgenommenen Tragsegment versteifen und stabilisieren. Das Tragsegment ist über lediglich einen einzigen Befestigungssteg am Förderträger aufgenommen. Am Basiskörper des Tragsegments angreifende Lasten, etwa durch eine Gewichtskraft des aufgenommenen Förderguts bedingt, können beim Befestigungssteg hohe Spannungen verursachen. Die Übergangsrippen erlauben eine flächige Aufnahme der Lasten, Spannungsspitzen können vermieden werden. Auch bei nur einem einzigen Befestigungssteg kann das Tragsegment robust und hochbelastbar ausgestaltet sein.

Gemäß einer Weiterbildung ist der Ausgleichskörper etwa stabförmig ausgebildet und in einer Ausnehmung des Basiskörpers aufgenommen, wobei ein freies Ende des Ausgleichskörpers in eine korrespondierende Ausnehmung eines weiteren Basiskörpers einführbar ist.

Auf diese Weise ist es eine besonders einfache Lagerung des Ausgleichskörpers in zwei benachbarten Basiskörpern ermöglicht.

Vorzugsweise ist die Aufnahme in zumindest einer der Ausnehmungen spielbehaftet, so dass der Ausgleichskörper in der Längsrichtung verschieblich in zumindest einer der Ausnehmungen aufgenommen ist.

Dies kann etwa dazu beitragen, dass sich durch eine Verschiebung des Ausgleichskörpers beim Durchfahren einer gekrümmten Förderstrecke ein Abstandsausgleich zweier miteinander gekoppelter Tragsegmente ergibt.

In bevorzugter Weiterbildung sind der Basiskörper und der Befestigungssteg aus einem Kunststoffwerkstoff, insbesondere einem thermoplastischen Werkstoff, gefertigt und insbesondere einstückig ausgeführt, wobei der Ausgleichskörper aus einem elastischen, insbesondere einem elastomeren Werkstoff hergestellt ist.

Somit können der Basiskörper und der Befestigungssteg im Vergleich zum Ausgleichskörper steif ausgeführt sein. Vorzugsweise ist der thermoplastische Werkstoff verstärkt, insbesondere faserverstärkt.

Es ist weiter bevorzugt, wenn das Tragsegment zumindest abschnittsweise reibungsmindernde und/oder verschleißmindernde Beschichtungen aufweist. Dies kann bspw. eine PTFE-Beschichtung (Teflon-Beschichtung) umfassen.

Zur Herstellung des Basiskörpers und des Befestigungsstegs eignen sich etwa Spritzgussverfahren. Insbesondere dann, wenn der Ausgleichskörper aus einem thermoplastischen Elastomer besteht, kann dieser auch mittels eines Spritzgussverfahrens hergestellt werden.

Die Aufgabe der Erfindung wird ferner gelöst durch einen Förderträger, insbesondere einen Zugstangenträger, mit einem Tragsegment nach einem der vorgenannten Aspekte, wobei der Förderträger einen Grundkörper aufweist, der sich im Wesentlichen in der Längsrichtung erstreckt, wobei der Grundkörper einen ersten Koppelabschnitt und einen zweiten Koppelabschnitt aufweist, wobei der erste Koppelabschnitt und der zweite Koppelabschnitt dazu ausgebildet sind, jeweils mit einem Führungsgelenk zusammenwirken, das mit einem weiteren Förderträger koppelbar ist.

Beispielhaft ist das Tragsegment lösbar am Grundkörper aufgenommen, vorzugsweise etwa mittig, wobei der Grundkörper und der Basiskörper des Tragsegments im Wesentlichen parallel zueinander ausgerichtet sind.

Gemäß einer alternativen Ausgestaltung können zumindest der Basiskörper und der einzige Befestigungssteg des Tragsegments integrale Bestandteile des Förderträgers sein.

Eine lösbare Aufnahme des Tragsegments am Grundkörper des Förderträgers erlaubt die Verwendung standardisierter Förderträger, insbesondere Zugstangenträger. Im Verschleißfall können etwa die Tragsegmente einfach ausgewechselt werden, ohne in die Kopplung der mehreren gekoppelten Förderträger eingreifen zu müssen.

Zwischen den Grundkörpern der beiden gekoppelten Förderträger und den Tragsegmenten und Basiskörpern der an diesen aufgenommenen und gleichfalls miteinander gekoppelten Tragsegmenten kann sich das einzige durchgängige Auflagefenster erstrecken.

Gemäß einer weiteren Ausgestaltung ist am Grundkörper ein vorzugsweise seitlicher Mitnahmeabschnitt vorgesehen, an dem eine Antriebseinrichtung zum Vortrieb des Förderträgers angreifen kann.

Auf diese Weise können die Förderträger selbst als Zugstangen und/oder Druckstangen fungieren. Die Antriebseinrichtung kann etwa als kraftschlüssige (reibschlüssige) und/oder formschlüssige Antriebseinrichtung ausgebildet sein.

In bevorzugter Weise ist zur Lösung der Aufgabe der Erfindung eine Förderkette für eine Förderanlage vorgesehen, insbesondere eine Zugstangenkette, zum Transport von hängenden Fördergütern, insbesondere von an Haken aufgenommenen Fördergütern, mit zumindest einem Förderträger nach einem der vorhergehenden Aspekte, der mit zumindest einem weiteren Förderträger gekoppelt ist.

Die Förderträger können grundsätzlich mittelbar oder unmittelbar miteinander gekoppelt sein.

Gemäß einem weiteren Aspekt ist es bevorzugt, wenn zwischen zwei gekoppelten Förderträgern jeweils ein Führungsgelenk vorgesehen ist, insbesondere ein kardanisches Führungsgelenk, das an einer Führungsschiene einer Förderanlage gelagert ist.

Auf diese Weise kann das Führungsgelenk sowohl eine Lagesicherung der einzelnen Förderträger an der Führungsschiene bewirken, als auch Ausgleichsbewegungen zwischen den gekoppelten Förderträgern erlauben.

Beispielhaft kann das Führungsgelenk dazu ausgebildet sein, zwischen den beiden gekoppelten Förderträgern eine Nickbewegung und/oder eine Gierbewegung zu erlauben. Eine Rollbewegung kann etwa durch die Lagerung des Führungsgelenks an der Führungsschiene unterbunden sein.

Gemäß einer weiteren Ausgestaltung weisen die Förderträger eine Gesamtlänge auf, die derart an eine Länge der Basiskörper und eine Länge der Ausgleichskörper der Tragsegmente angepasst ist, dass in der Förderkette jeweils ein Ausgleichskörper zwischen zwei Basiskörpern aufgenommen ist und zum Toleranzausgleich zumindest einseitig in der Längsrichtung verschieblich gelagert ist.

Der elastische Ausgleichskörper kann sich zum Toleranzausgleich einerseits verbiegen, andererseits jedoch auch in zumindest einen der beiden Basiskörper eintauchen oder aus diesem herausfahren.

Beispielhaft kann der Ausgleichskörper auf einer Seite fest am Basiskörper aufgenommen sein und auf der anderen Seite verschieblich am Basiskörper des nachfolgenden Tragsegments gelagert sein. Es ist jedoch auch eine beidseitig verschiebliche Lagerung denkbar.

Die beteiligten Komponenten können derart ausgelegt werden, dass der Ausgleichskörper auch beim Durchfahren stark gekrümmter Förderpfade verliersicher zwischen den beiden durch diesen gekoppelten Basiskörpern aufgenommen ist.

In bevorzugter Weiterbildung weisen die Auflagefenster, die sich zwischen jeweils zwei gekoppelten Tragsegmenten ergeben, eine Länge auf, die zumindest 75%, vorzugsweise mindestens 85%, weiter bevorzugt mindestens 95% der Gesamtlänge beträgt, die ein gekoppelter Förderträger beansprucht.

Es versteht sich, dass die Gesamtlänge des gekoppelten Förderträgers auch das zu dessen Aufnahme an der Förderschiene vorgesehene Führungsgelenk umfassen kann. Je höher der Anteil der Länge der Auflagefenster an der Gesamtlänge ist, desto weniger Totraum wird verschwendet. Die Förderkette kann insgesamt kompakter gestaltet sein und etwa bei gegebener Fördergeschwindigkeit eine höhere Förderleistung erlauben.

Die Aufgabe der Erfindung wird ferner auch gelöst durch eine Förderanlage, insbesondere eine Hängeförderanlage, zum Transport hängender Fördergüter, die folgendes ausweist:
- einen Förderpfad mit zumindest einer Führungsschiene,
- eine Förderkette nach einem der vorgenannten Aspekte, mit einer Mehrzahl von Förderträgern mit Tragsegmenten, die unter Ausbildung durchgängiger Auflagefenster an der Führungsschiene aufgenommen sind, und
- zumindest eine Antriebseinrichtung zum Vortrieb der Förderträger, wobei die Antriebseinrichtung vorzugsweise als im Wesentlichen reibschlüssiger Antrieb, insbesondere als Reibrollenantrieb ausgestaltet ist.

Auch auf diese Weise wird die Aufgabe der Erfindung vollkommen gelöst.

Der Reibrollenantrieb kann etwa schlupfbehaftet sein. Dies kann dazu beitragen, im Falle von Störungen an der Förderanlage, die etwa zu einem Stillstand der Förderkette führen, Beschädigungen durch die weiterlaufende Antriebseinrichtung zu vermeiden. Es sind jedoch auch Anwendungsfälle denkbar, bei denen die Antriebseinrichtung als im Wesentlichen formschlüssiger Antrieb, bspw. als verzahnungsgebundener Antrieb ausgestaltet ist.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine schematisch vereinfachte Draufsicht einer Förderanlage;
- Fig. 2: eine gebrochene Seitenansicht einer Förderkette mit Förderträgern, die an einer Förderschiene einer Förderanlage aufgenommen sind;
- Fig. 3: eine perspektivische Ansicht eines weiteren Förderträgers mit einem Tragsegment;
- Fig. 4: eine gebrochene vereinfachte Seitenansicht einer Förderkette mit einer Mehrzahl von Förderträgern, der eine Aufgabestation und eine Abgabestation zugeordnet ist;
- Fig. 5: eine gebrochene Seitenansicht zweier gekoppelter Förderträger mit zwei Tragsegmenten;
- Fig. 6: eine partiell geschnittene Seitenansicht eines Tragsegments gemäß Fig. 5;
- Fig. 7: eine geschnittene Teildarstellung einer Draufsicht des Tragsegments gemäß Fig. 6 entlang der Linie VII-VII im Bereich eines Befestigungsstegs;
- Fig. 8: eine perspektivische Ansicht des Tragsegments gemäß Fig. 6 in einer ersten Orientierung; und
- Fig. 9: eine weitere perspektivische Ansicht des Tragsegments gemäß Fig. 6 in einer gegenüber Fig. 8 abgewandelten Orientierung.

Bei der nachfolgenden Beschreibung der Erfindung werden gleiche Teile und Merkmale mit gleichen Bezugszeichen versehen, wobei die in der gesamten Beschreibung enthaltenen Offenbarungen sinngemäß auf gleiche Teile und Merkmale mit gleichen Bezugszeichen übertragen werden können. Lageangaben wie z.B. "oben", "unten", "seitlich" etc. sind auf die unmittelbar beschriebene Figur bezogen und bei einer Lageänderung sinngemäß auf die neue Lage zu übertragen.

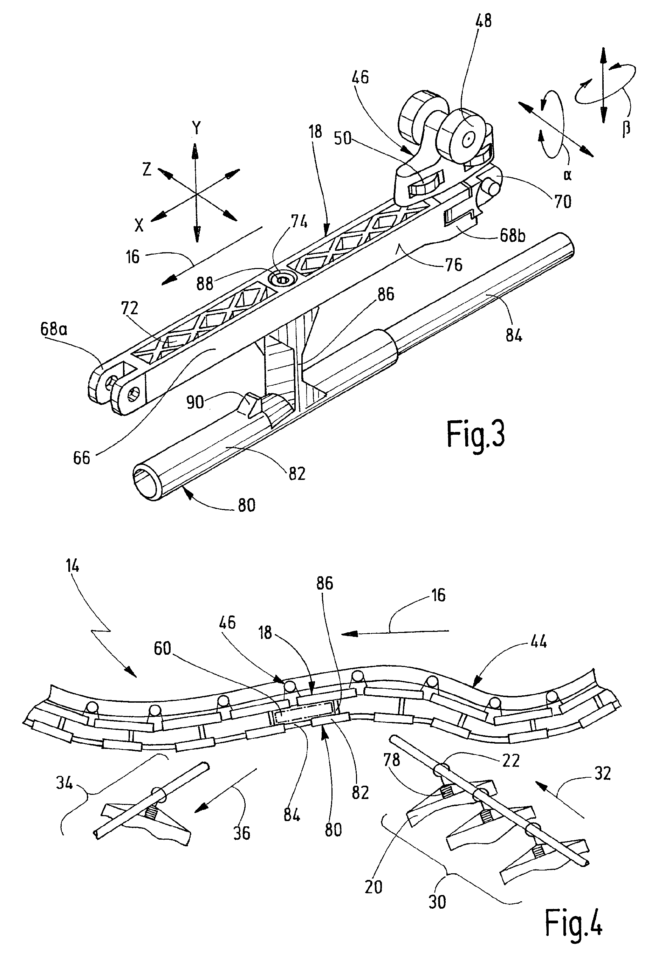

Ferner ist zu beachten, dass Richtungsangaben und Orientierungen zugrunde gelegt werden, die sich grundsätzlich an die in der (Intra-)Logistik üblichen Bezeichnungen anlehnen. Folglich wird die Längsrichtung (Förderrichtung) mit "X", die Tiefe (Breite) mit "Z" und die (vertikale) Höhe mit "Y" bezeichnet. Beispielsweise kann Fig. 3 ein damit korrespondierendes (kartesisches) Koordinatensystem X, Y, Z entnommen werden.

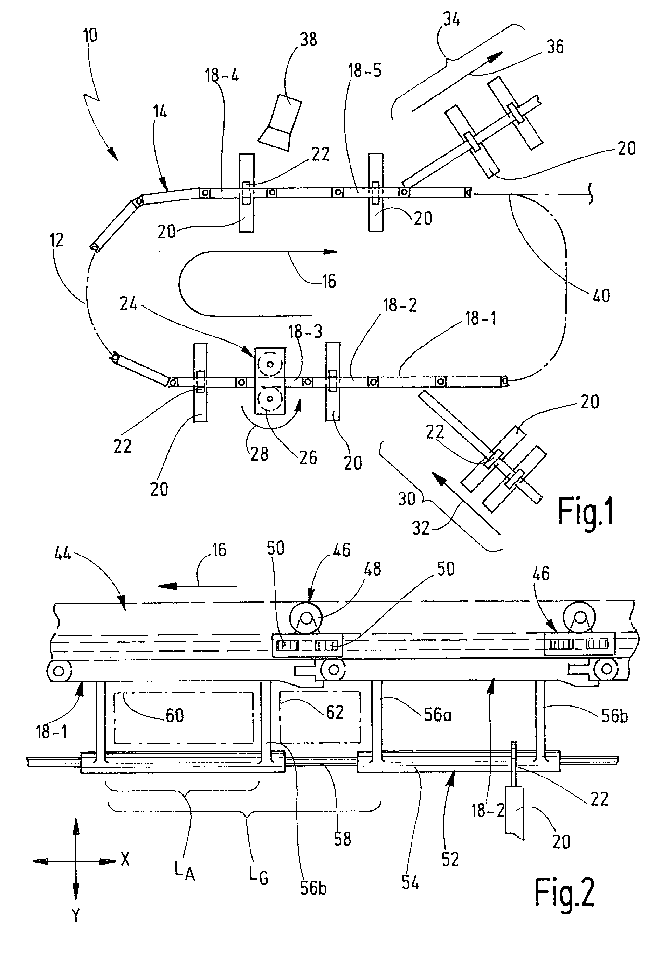

Fig. 1 zeigt eine schematisch stark vereinfachte Draufsicht einer Förderanlage 10. Die Förderanlage 10 kann etwa als Hängeförderanlage ausgebildet sein. Die Förderanlage 10 kann allgemein zum Transport hängender Waren benutzt werden. Dabei kann es sich etwa um Kleidungsstücke, Textilien allgemein, ebenso jedoch auch um in Ladehilfsmitteln aufgenommene Fördergüter handeln. Die Ladehilfsmittel können etwa als sog. Fördertaschen ausgebildet sein. Eine zum hängenden Transport besonders geeignete Fördertasche ist in der deutschen Patentanmeldung DE 10 2011 101 987.5 beschrieben, die am 17.05.2011 eingereicht wurde und auf die hiermit in vollem Umfang Bezug genommen wird.

Die Förderanlage 10 weist zumindest einen Förderpfad 12 auf. Entlang des Förderpfads 12 erstreckt sich eine Förderkette 14 (in Fig. 1 partiell ausgeblendet). Die Förderkette 14 kann in geeigneter Weise in einer Förderrichtung 16 entlang des Förderpfads 12 verfahren werden.

Die Förderkette 14 weist eine Mehrzahl miteinander gekoppelter Förderträger 18 auf. Die Förderträger 18 können beispielhaft etwa als Glieder der Förderkette 14 aufgefasst werden.

An den Förderträgern 18 können Fördergüter 20 aufgenommen sein. Die Fördergüter 20 können mittelbar oder unmittelbar mit den Förderträgern 18 verbunden sein. Beispielsweise können die Fördergüter 20 über Verbindungselemente 22 mittelbar oder unmittelbar an den Förderträgern 18 aufgenommen sein. Die Verbindungselemente 22 können beispielhaft etwa als Bügel, insbesondere als Kleiderbügel ausgestaltet sein. Die Verbindungselemente 22 können jedoch auch als Befestigungshaken ausgestaltet sein, insbesondere dann, wenn die Fördergüter 20 in einem Ladehilfsmittel, etwa einer Fördertasche, aufgenommen sind.

Die Förderkette 14 der Förderanlage 10 ist ferner zumindest eine Antriebseinrichtung 24 zu deren Vortrieb zugeordnet. Grundsätzlich kann die Förderkette 14 etwa mittels eines Zugmittels angetrieben bzw. mitgenommen werden. Alternativ dazu zeigt Fig. 1 eine Ausgestaltung, bei der die Förderkette 14 selbst als Zugmittel fungiert. Die Förderkette 14 kann etwa als sog. Zugstangenkette ausgebildet sein. Die Förderkette 14 kann in derart zugsteif (bzw. drucksteif) gestaltet sein, dass etwa die Antriebseinrichtung 24, die vorzugsweise ortsfest angeordnet ist, jeweils passierende Förderträger 18 antreiben kann und somit die gesamte Förderkette 14 in Bewegung versetzen kann. Es versteht sich, dass entlang des Förderpfads 12 der Förderkette 14 eine, zwei oder mehrere Antriebseinrichtungen 24 vorgesehen sein können.

Die Antriebseinrichtung 24 kann als Reibrollenantrieb ausgebildet sein. Hierzu kann die Antriebseinrichtung 24 über zumindest eine Reibrolle 26 auf einen passierenden Förderträger 18 zu dessen Fortbewegung einwirken. Beispielhaft erzeugt eine Rotation der Reibrolle 26 (Pfeil 28) einen Vortrieb der Förderkette 14 in der Förderrichtung 16. Der Antriebseinrichtung 24 in der Förderrichtung 16 vorgelagerte Förderträger 18 (auch bezeichnet als stromabwärtige Förderträger 18) werden durch den aktuell durch die Reibrolle 26 beaufschlagten Förderträger 18 (Bezugszeichen 18-3) in der Förderrichtung 16 geschoben bzw. vorangedrückt. Der Antriebseinrichtung 24 in der Förderrichtung 16 nachgelagerte Förderträger 18 (hier etwa die Förderträger 18-1, 18-2), auch bezeichnet als stromaufwärtige Förderträger 18, werden durch den aktuell angetriebenen Förderträger 18-3 gezogen. Insofern dürfen Bezeichnungen wie Zugstangenkette bzw. Zugstangenförderer nicht einschränkend verstanden werden. Eine beispielhafte Gestaltung der Förderträger 18 kann der deutschen Patentanmeldung DE 10 2010 053 426.9 entnommen werden, die am 30.11.2010 eingereicht wurde. Auf den Inhalt dieser Anmeldung wird hiermit in vollem Umfang Bezug genommen.

Der Förderanlage 10 in Fig. 1 ist ferner eine Aufgabestation 30 zugeordnet, mittels der Fördergüter 20 in den Förderpfad 12 einschleusbar bzw. einführbar sind (Pfeil 32). Daneben weist die Förderanlage 10 beispielhaft weiter eine Abgabestation 34 auf, mittels der Fördergüter 20 aus dem Förderpfad 12 ausgeschleust bzw. entnommen werden können (Pfeil 36). Die Einschleusvorgänge bzw. Ausschleusvorgänge können etwa selektiv erfolgen. So kann bspw. geprüft werden, ob der mittels der Aufgabestation 30 zu belegende Förderträger 18-1 frei oder aber bereits durch zumindest ein Fördergut 20 belegt ist. Es versteht sich, dass grundsätzlich eine Mehrzahl von Fördergütern 20 nebst zugehöriger Verbindungselemente 22 an einem Förderträger 18 aufgenommen sein kann. Jedoch gestalten sich insbesondere Einschleusvorgänge und Ausschleusvorgänge bei einer derartigen Mehrfachbelegung aufwändiger als bei einer Einzelbelegung. Gleichwohl steht die Darstellung gemäß Fig. 1 einem derartigen Ansatz nicht entgegen.

In Fig. 1 steht der Förderträger 18-1 zur Belegung bereit. Der Förderträger 18-2 ist bereits mit einem Fördergut 20 belegt. An den Förderträger 18-3 greift die Antriebseinrichtung 24 mittels der zumindest einen Reibrolle 26 an. Ein Reibrollenantrieb kann etwa schlupfbehaftet sein. Dies kann insbesondere bei Überlastungen, Schäden an der Förderkette 14, unerwünschten Stauungen oder Ähnlichem von Vorteil sein, um Folgeschäden bzw. eine Überlastung der Antriebseinrichtung 24 zu vermeiden. Die Antriebseinrichtung 24 kann eine Mehrzahl von paarweise oder versetzt angeordneten Reibrollen 26 aufweisen. Diese können insbesondere mit einer Anpresskraft in Richtung der Förderträger 18 vorgespannt sein. Es ist grundsätzlich möglich, beide der in Fig. 1 gezeigten Reibrollen 26 anzutreiben. Jedoch kann ebenso auch nur eine der beiden Reibrollen 26 antreibbar gestaltet sein, während die nicht angetriebene Reibrolle vorwiegend als sog. Andrückrolle fungiert. Mit beiden Ausgestaltungen können übermäßige Seitenkräfte in einer Z-Richtung (vgl. auch Fig. 3) auf die Förderträger 18 vermieden werden. Es versteht sich, dass die Antriebseinrichtung 24 hinsichtlich der Anzahl und Anordnung der Reibrollen 26 von der in Fig. 1 gezeigten schematischen Ausgestaltung abweichen kann. Wie eingangs bereits erwähnt, kann die Förderanlage auch eine Antriebseinrichtung 24 aufweisen, die formschlüssig mit den Förderträgern 18 zusammenwirken kann.

Im Bereich des Förderträgers 18-4 weist die Förderanlage 10 eine Sensoreinrichtung 38 auf. Die Sensoreinrichtung 38 kann bspw. als optische und/oder funkbasierte Sensoreinrichtung 38 ausgebildet sein. Mittels der Sensoreinrichtung 38 können die Fördergüter 20 und/oder deren Verbindungselemente 22 identifiziert werden. Auf diese Weise kann etwa ein selektives Einschleusen oder Ausschleusen in den Förderpfad 12 gesteuert werden. Die Sensoreinrichtung 38 kann dazu ausgebildet sein, Identifikationselemente (vgl. Bezugszeichen 78 in Fig. 4) zu erfassen. Bei den Identifikationselementen 78 (Fig. 4) kann es sich grundsätzlich etwa um optische Elemente, etwa Strichcodes oder Ähnliches, ebenso jedoch auch um Transponder, bspw. sog. RFID-Chips, handeln. Diese Sensoreinrichtung 38 kann etwa über eine in Fig. 1 nicht abgebildete Steuerungseinrichtung mit der Abgabestation 34 gekoppelt sein. So kann die Abgabestation 34 selektiv angesteuert werden, um das am Förderträger 18-5 aufgenommene Fördergut 20 aus dem Förderpfad 12 auszuschleusen. Es versteht sich, dass auch die Antriebseinrichtung 24 und die Aufgabestation 30 mit der Steuerungseinrichtung gekoppelt sein können. Ferner versteht sich, dass eine weitere Sensoreinrichtung 38, die jedoch gegenüber der gezeigten Sensoreinrichtung 38 abgewandelt sein kann, der Aufgabestation 30 zugeordnet sein kann. Diese Sensoreinrichtung 38 kann beispielhaft einen Belegungszustand eines zu beschickenden Förderträgers 18 erfassen.

In Fig. 1 ist mit 40 ferner eine Weiche beschrieben, an der der Förderpfad 12 verzweigt sein kann. Grundsätzlich kann der Förderpfad 12 etwa als sog. Förderkreis, als im Wesentlichen linearer Förderpfad oder als beliebige Kombination daraus ausgestaltet sein.

Die in Fig. 1 gezeigte Förderanlage 10 kann grundsätzlich in der Bekleidungsindustrie Verwendung finden. Die Verwendung ist jedoch nicht darauf beschränkt. Es sind weitere Anwendungen in Vertriebszentren bzw. Verteilzentren, etwa als Bestandteil von Kommissionieranlagen denkbar.

Fig. 2 zeigt eine seitliche Ansicht zweier miteinander gekoppelter Förderträger 18-1, 18-2, die etwa Bestandteil der Förderkette 14 gemäß Fig. 1 sein können. Die Förderträger 18-1, 18-2 können mittelbar oder unmittelbar miteinander gekoppelt sein. Vorliegend ist den Förderträgern 18-1 und 18-2 ein an einer Führungsschiene 44 aufgenommenes Führungsgelenk 46 zwischengeordnet, das eine mittelbare Koppelung erlaubt. Die Führungsschiene 44 (in Fig. 2 gestrichelt dargestellt) kann den Verlauf des Förderpfads 12 verkörpern, entlang dem die Förderträger 18 verfahrbar sind. Die Führungsschiene 44 kann zumindest ein Führungsprofil aufweisen, das eine Lage und Orientierung des Führungsgelenks 46 definiert. Auf diese Weise kann die Orientierung der Förderträger 18 vorgegeben werden. Das Führungsgelenk 46 weist vertikale Führungsrollen 48 (vgl. auch Fig. 3) und seitliche Führungsrollen 50 auf. Somit sind die Förderträger 18 in einer Y-Richtung und in der Z-Richtung (vgl. wiederum Fig. 3) definiert geführt. In einer X-Richtung, auch bezeichnet als Längsrichtung, können die Förderträger 18 in der Förderrichtung 16 verfahren werden, etwa durch die Antriebseinrichtung 24 gemäß Fig. 1.

Die Förderträger 18-1, 18-2 gemäß Fig. 2 weisen jeweils ein Leitersegment 52 auf bzw. sind mit diesem gekoppelt. Das Leitersegment 52 umfasst einen Auflagekörper 54 und mindestens zwei Vertikalstege 56a, 56b. Die Auflagekörper 54 der Förderträger 18-1 und 18-2 sind ferner mittels eines Zwischenelements 58 gekoppelt. Zwischen den Vertikalstegen 56a und 56b ergibt sich ein Auflagefenster 60 (angedeutet durch ein strichpunktiertes Rechteck). In diesem Bereich kann das Fördergut 20 mittels des Verbindungselements 22 am Auflagekörper 54 aufgenommen werden.

Zwischen dem Vertikalsteg 56b des Förderträgers 18-1 und dem Vertikalsteg 56a des Förderträgers 18-2 ergibt sich ferner ein Ausgleichsfenster 62. Das Ausgleichsfenster 62, d.h., ein Freiraum zwischen jeweils zwei Leitersegmenten 52, ist erforderlich, um Ausgleichsbewegungen zwischen den Förderträgern 18-1 und 18-2 zu erlauben. Das ist etwa beim Durchfahren eines gekrümmten Förderpfads 12 bzw. einer gekrümmten Führungsschiene 44 erforderlich, vgl. etwa Fig. 4. Es erschließt sich, dass etwa dann, wenn der Förderträger 18-1 gegenüber dem Förderträger 18-2 geneigt ist, das Ausgleichsfenster 62 entsprechend kleiner oder größer werden kann. Das Ausgleichsfenster 62 ist erforderlich, um Kollisionen der an den Förderträgern 18-1, 18-2 aufgenommenen Leitersegmente 52 zu vermeiden.

In Fig. 2 ist mit L_{A} eine Auflagelänge bezeichnet, die mit dem Auflagefenster 60 korrespondiert. Entlang der Auflagelänge L_{A} kann das Fördergut 20 aufgenommen werden. Ferner ist mit L_{G} eine Gesamtlänge bezeichnet, die etwa eine Länge beschreibt, die ein Förderträger 18 beansprucht, der mit weiteren Förderträgern 18 zu einer Förderkette 14 gekoppelt ist. Mit anderen Worten korrespondiert die Gesamtlänge L_{G} im Wesentlichen mit einer Summe der Längserstreckungen des Auflagefensters 60 und des Ausgleichsfensters 62 (sowie der Vertikalstege 56a, 56b). Diese Definition gilt im Wesentlichen für eine Neutralstellung, also einen nicht gekrümmten Förderpfad 12 bzw. eine gerade Führungsschiene 44, wie in Fig. 2 gezeigt.

Es hat sich gezeigt, dass der stetige Wechsel zwischen dem Auflagefenster 60 und dem Ausgleichsfenster 62 eine besondere Herausforderung für Einschleusvorgänge bzw. Ausschleusvorgänge von Fördergütern 20 darstellen kann. Es besteht grundsätzlich die Gefahr, dass ein Fördergut 20 in den Bereich des Ausgleichsfensters 62 eingebracht wird. Eine derartige fehlerhafte Einschleusung kann beim Durchfahren des Förderpfads 12 bzw. bei anschließenden Ausschleusvorgängen Fehler hervorrufen und zum einen das Fördergut 20 selbst, zum anderen ebenso auch Komponenten der Förderanlage 10 beschädigen. Dies kann etwa dann der Fall sein, wenn das "falsche" Auflagefenster, also das Ausgleichsfenster 62, nicht lang genug ist, um eine Abgabe des Fördergutes 20 zu ermöglichen. Üblicherweise wird das Fördergut 20, bzw. dessen Verbindungselement 22, durch die Abgabestation 34 untergriffen und zumindest partiell vom Leitersegment 52 gehoben. Dies kann bei einem fehlerhaft eingebrachten Fördergut 20 unter Umständen sogar zu Kollisionen zischen der Abgabestation 34 und der Förderkette 14 führen, die nahezu zwangsläufig zu Beschädigungen und zu einem Stillstand der Förderanlage 10 führen. Fehllagen des Förderguts 20, also Einschleusungen in den Bereich des Ausgleichsfensters 62, müssen mittels aufwändiger Sensorik überwacht und abgefangen werden.

Ferner ist mit dem Auflagefenster 60 des Auflagekörpers 54, also der Auflagelänge L_{A}, nur ein bestimmter Abschnitt der Gesamtlänge L_{G} zur Auflage der Fördergüter 20 nutzbar. Konstruktiv bedingt ist eine bestimmte Auflagelänge L_{A} erforderlich, um sichere Einschleusungen und Ausschleusungen gewährleisten zu können. Das erforderliche Ausgleichsfenster 62 trägt dazu bei, dass die Gesamtlänge L_{G} bei der Gestaltung gemäß Fig. 2 relativ groß ausfällt. Mit anderen Worten kann die Produktivität bzw. Kapazität der Förderanlage 10 sinken, je größer die Gesamtlänge L_{G} im Vergleich zur Auflagelänge L_{A} ist. Folglich kann in dem Maße, wie der Anteil der Auflagelänge L_{A} an der Gesamtlänge L_{G} gesteigert werden kann, die Kapazität der Förderanlage 10 gesteigert werden. Dies könnte etwa derart geschehen, dass bei gegebenen erforderlichen Abmessungen des Auflagefensters 60, also bei gegebener Auflagelänge L_{A}, die Gesamtlänge L_{G} reduziert wird. Folglich kann dann etwa eine größere Anzahl von Förderträgern 18 in einen gegebenen Förderpfad 12 eingebracht werden, so dass die Kapazität zur Aufnahme von Fördergütern 20 steigt.

Einen derartigen Ansatz verfolgt das Tragsegment 80, das in Fig. 3 gemeinsam mit dem Förderträger 18 perspektivisch dargestellt ist.

Der Förderträger 18 gemäß Fig. 3 kann grundsätzlich mit den Förderträgern 18-1, 18-2 gemäß Fig. 2 übereinstimmen bzw. diesem ähneln. Wie oben bereits angedeutet, können die Förderträger 18 jedoch ohne weiteres etwa an ein sich ergebendes Auflagefenster 60 angepasst sein, also verschiedene, an einen jeweiligen Anwendungszweck angepasste Längserstreckungen in der X-Richtung aufweisen. Der Förderträger 18 weist einen Grundkörper 66 mit einem ersten Koppelabschnitt 68a und einem zweiten Koppelabschnitt 68b auf. Mittels des Führungsgelenks 46 kann der zweite Koppelabschnitt 68b des Förderträgers 18 mit einem ersten Koppelabschnitt 68a eines weiteren Förderträgers 18 unter Zwischenschaltung des Führungsgelenks 46 zur Bildung der Förderkette 14 gekoppelt werden. Am Führungsgelenk 46 ist ein Verbindungsabschnitt 70 vorgesehen, mit dem der korrespondierende Koppelabschnitt 68a des nachfolgenden Förderträgers 18 koppelbar ist. Ein weiterer Verbindungsabschnitt ist in Fig. 3 bereits mit dem zweiten Koppelabschnitt 68b gekoppelt und durch diesen verdeckt.

Zwischen zwei mittels des Führungsgelenks 46 gekoppelten Förderträgers 18 können sich beim Durchfahren des Förderpfads 12 bzw. der damit korrespondierenden Führungsschiene 44 (vgl. Fig. 4) Ausgleichsschwenkbewegungen ergeben. So kann etwa der erste Koppelabschnitt 68a derart am Führungsgelenk 46 aufgenommen sein, dass sich zwischen den aufeinanderfolgenden Förderträgern 18 eine Ausgleichsschwenkbewegung um die Z-Achse (Winkel α) ergeben kann. Eine derartige Bewegung kann auch als Nicken beschrieben werden. Ferner kann der zweite Koppelabschnitt 68b derart mit dem Führungsgelenk 46 gekoppelt sein, das eine Ausgleichsschwenkbewegung um die Y-Achse (Winkel β) ermöglicht ist. Eine derartige Bewegung kann auch als Gieren beschrieben werden.

Insgesamt kann das Führungsgelenk 46 als zumindest teilweise kardanisches Gelenk fungieren. Zwei aufeinanderfolgende Förderträger 18 können Ausgleichsschwenkbewegungen um die Y-Achse, um die Z-Achse, nicht jedoch um die X-Achse vollziehen. Eine Schwenkbewegung um die X-Achse kann auch als Rollen bezeichnet werden. Auf diese Weise kann die Führungsschiene 44 in weiten Grenzen beliebig gestaltet und an einen jeweils gegebenen Bauraum und Einsatzzweck angepasst sein.

Der Förderträger 18 gemäß Fig. 3 weist ferner eine Rippenanordnung 72 auf, die sich entlang des Grundkörpers 66 zwischen dem ersten Koppelabschnitt 68a und dem zweiten Koppelabschnitt 68b erstreckt. Die Rippenanordnung 72 ist durch einen Zentralbereich mit einer zentralen Ausnehmung 74 unterbrochen. Die zentrale Ausnehmung 74 ist vorzugsweise etwa mittig entlang der Längserstreckung des Grundkörpers 66 angeordnet. Der Grundkörper 66 weist ferner einen seitlichen Mitnahmeabschnitt 76 auf, dem auf der gegenüberliegenden Seite des Grundkörpers 66 ein weiterer seitlicher Mitnahmeabschnitt 76 zugeordnet sein kann. Der Mitnahmeabschnitt 76 kann etwa als eine Fläche aufgefasst werden, an der die Reibrollen 26 der Antriebseinrichtung 24 angreifen können. Neben einem reibschlüssigen Antrieb des Förderträgers 18 ist grundsätzlich auch ein formschlüssiger Antrieb denkbar. Beispielhaft kann der Förderträger 18 analog der deutschen Patentanmeldung DE 10 2010 053 426.9 eine Verzahnung aufweisen, an der ein Zahnrad einer Antriebseinrichtung eingreifen kann. Der Förderträger 18 kann ferner dazu ausgebildet sein, sowohl mit einer reibschlüssigen Antriebseinrichtung als auch mit einer formschlüssigen Antriebseinrichtung zusammenzuwirken.

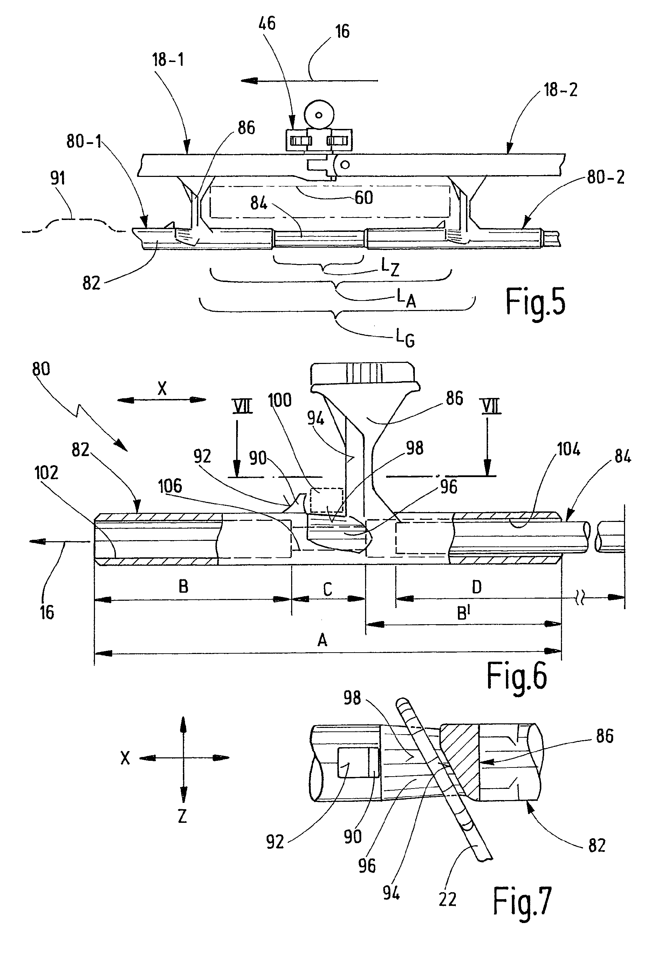

Das oben erwähnte Tragsegment 80 ist am Förderträger 18 aufgenommen. Das Tragsegment 80 weist einen Basiskörper 82 auf, der etwa stabförmig ausgebildet ist. Der Basiskörper 82 ist im Wesentlichen parallel zum Grundkörper 66 des Förderträgers 18 orientiert. Am Basiskörper 82 des Tragsegments 80 ist ferner ein Ausgleichskörper 84 aufgenommen. Der Ausgleichskörper 84 kann austauschbar aufgenommen sein. Der Ausgleichskörper 84 stellt einen insbesondere flexiblen Fortsatz des Basiskörpers 82 in dessen Längserstreckung dar. Der Ausgleichskörper 84 kann ebenso stabförmig oder zylinderförmig gestaltet sein. Der Ausgleichskörper 84 ist dazu ausgebildet, das Tragsegment 80 mit einem weiteren Tragsegment 80 zu koppeln, vgl. auch Fig. 4 und 5.

Der Basiskörper 82 weist ferner einen einzigen Befestigungssteg 86 auf, der sich in Richtung des Grundkörpers 66 des Förderträgers 18 erstreckt. Der Befestigungssteg 86 kann im Bereich der zentralen Ausnehmung 74 mit dem Grundkörper 66 gekoppelt sein. Die Verbindung kann über ein Verbindungselement 88 gesichert sein. Bei dem Verbindungselement 88 kann es sich um eine Schraube oder Ähnliches handeln. Es versteht sich, dass bei dem Befestigungssteg 86 eine mit dem Verbindungselement 88 korrespondierende Gegenkontur vorgesehen sein kann. Dabei kann es sich um eine Mutter oder aber ein integriertes Innengewinde handeln.

Der Befestigungssteg 86 kann sich ungefähr rechtwinklig zu einer Längserstreckung des Basiskörpers 82 erstrecken. Davon kann insbesondere umfasst sein, dass sich der Befestigungssteg 86 etwa quer zum Basiskörper 82 in Richtung des Grundkörpers 66 erstreckt.

Gemäß der Gestaltung in Fig. 3 kann das Tragsegment 80 vom Förderträger 18 gelöst werden. Dies erlaubt etwa eine besonders flexible Nutzung standardisierter Förderträger 18. Es ist jedoch ebenso denkbar, zumindest den Grundkörper 66 des Förderträgers 18 sowie den Basiskörper 82 und den Befestigungssteg 86 des Tragsegments 80 integral auszuführen.

Dem Befestigungssteg 86 des Tragsegments 80 kann in der Förderrichtung 16 eine Orientierungsnase 90 vorgelagert sein. Die Orientierungsnase 90 kann gemeinsam mit dem Befestigungssteg 86 einen Vorzugslagebereich für ein aufzunehmendes Fördergut 20 definieren (vgl. Bezugszeichen 100 in Fig. 6).

Gemäß der Gestaltung in Fig. 3 ist am Basiskörper 82 des Tragsegments lediglich ein einziger Befestigungssteg 86 zur Verbindung mit dem Förderträger 18 vorgesehen. Auf diese Weise ist eine Kopplung des Tragsegments 80 mit weiteren an Förderträgern 18 aufgenommenen Tragsegmenten 80 unter Vermeidung des Ausgleichsfensters 62 ermöglicht, das bei der Gestaltung gemäß Fig. 2 noch erforderlich ist.

Fig. 4 zeigt eine Seitenansicht eines Abschnitts einer Förderkette 14, der in einer gekrümmten Führungsschiene 44 geführt ist. Die Förderkette 14 weist eine Mehrzahl von Förderträgern 18 mit daran aufgenommenen Tragsegmenten 80 auf. Die gekrümmte Führungsschiene 44 erfordert Ausgleichsbewegungen zwischen den Förderträgern 18 bzw. den Tragsegmenten 80. Zu diesem Zweck kann der Ausgleichskörper 84 jedes Tragsegment 80 in geeigneter Weise elastisch ausgeführt sein. Der Ausgleichskörper 84 kann sich etwa verbiegen und/oder zum Zweck eines Längenausgleichs in den Basiskörper 82 des Tragsegments 80 eintauchen bzw. aus diesem herausfahren. Näheres wird nachfolgend anhand der Figuren 5 und 6 erläutert. Es ist ferner ersichtlich, dass der Ausgleichskörper 84 Bestandteil des (einzigen) Auflagefensters 60 ist. Ein einzuschleusendes Fördergut 20 kann folglich ohne nachteilige Auswirkungen in den Bereich des Ausgleichskörpers 84 eingeschleust werden.

In Fig. 4 sind ferner die Aufgabestation 30 und die Abgabestation 34 angedeutet. Gemäß der Gestaltung in Fig. 4 sind die Verbindungselemente 22 der Fördergüter 20 etwa als Bügel, insbesondere als Kleiderbügel, ausgeführt. Jedem der Verbindungselemente 22 ist ein Identifikationselement 78 zugeordnet, bspw. ein Strichode und/oder ein RFID-Chip. Die Identifikationselemente 78 können etwa mittels der Sensoreinrichtung 38 (Fig. 1) erfasst werden.

In Fig. 5 ist eine gebrochene Seitenansicht zweier miteinander gekoppelter Förderträger 18-1, 18-2 dargestellt. Am in der Förderrichtung 16 stromabwärtig angeordneten Förderträger 18-1 ist das Tragsegment 80-1 aufgenommen. Am gegenüber dem Förderträger 18-1 stromaufwärts versetzten Förderträger 18-2 ist das Tragsegment 80-2 aufgenommen. Zwischen den Befestigungsstegen 86 der Tragsegmente 80-1, 80-2 ist unter Einbeziehung des Ausgleichskörpers 84 ein durchgängiges Auflagefenster 60 vorgesehen. Analog zur in Fig. 2 gezeigten Darstellung beschreiben L_{G} die Gesamtlänge und L_{A} die Auflagelänge. Ferner ist mit L_{Z} eine Zwischenlänge beschrieben, die etwa einen Abstand zwischen den Basiskörpern 82 der Tragsegmente 80-1, 80-2 beschreibt, den der Ausgleichskörper 84 überbrückt. Die Auflagelänge L_{A} nimmt einen großen Anteil an der Gesamtlänge L_{G} ein. Es gibt kein klassisches Ausgleichsfenster 62. Es versteht sich, dass die Längen L_{G}, L_{A} und L_{Z} im Falle einer Ausgleichsschwenkbewegung zwischen den Förderträgern 18-1, 18-2 leichte Änderungen erfahren können.

Bei Verwendung durchgängiger Auflagefenster 60 können grundsätzlich Förderträger 18 mit geringerer (absoluter) Längserstreckung verbaut werden. Somit kann die Förderkette 14 noch flexibler und wendiger gestaltet sein. Mögliche Krümmungen des Förderpfads 12 bzw. der damit korrespondierenden Führungsschiene 44 können noch größer ausfallen.

In Fig. 5 ist ferner durch eine gestrichelte Linie eine Kulissenbahn 91 angedeutet. Die Kulissenbahn 91 kann in der Förderichtung 16 ansteigende und/oder absteigende Flanken aufweisen. Die Kulissenbahn 91 kann etwa eine oder zwei Kufen aufweisen, die dem Förderpfad 12 zugeordnet sind. Vorzugsweise ist die Kulissenbahn 91 als passive Komponente ausgeführt und gestellfest bei der Förderanlage 10 vorgesehen. Der Kulissenbahn 91 kann die Funktion zufallen, das im Bereich des Auflagefensters 60 aufgenommene Fördergut 20 sicher in den Vorzugslagebereich (vgl. wiederum Bezugszeichen 100 in Fig. 6) einzubringen. Dies kann beim Vorbeifahren der Förderträger 18 erfolgen. Die Kulissenbahn 91 kann dazu ausgebildet sein, das Verbindungselement 22 des Förderguts 20 ein Stück weit in der Y-Richtung anzuheben, um die Orientierungsnase 90 überwinden zu können. Die Mitnahme des von der Kulissenbahn 91 angehobenen Verbindungselements 22, das etwa kurzzeitig nicht mehr auf dem Basiskörper 82 und/oder dem Ausgleichskörper 84 aufliegt, kann durch den Befestigungssteg 86 erfolgen.

Anhand der Figuren 6 bis 9 wird eine bevorzugte Ausgestaltung des Tragsegments 80 näher beschrieben. Fig. 6 zeigt eine vergrößerte, partiell geschnittene seitliche Darstellung des Tragsegments 80. Die am Basiskörper 82 vorgesehene Orientierungsnase 90 weist eine Leitfläche 92 auf, die gegenüber der Längsrichtung (X-Richtung) geneigt ist, vgl. auch Fig. 7.

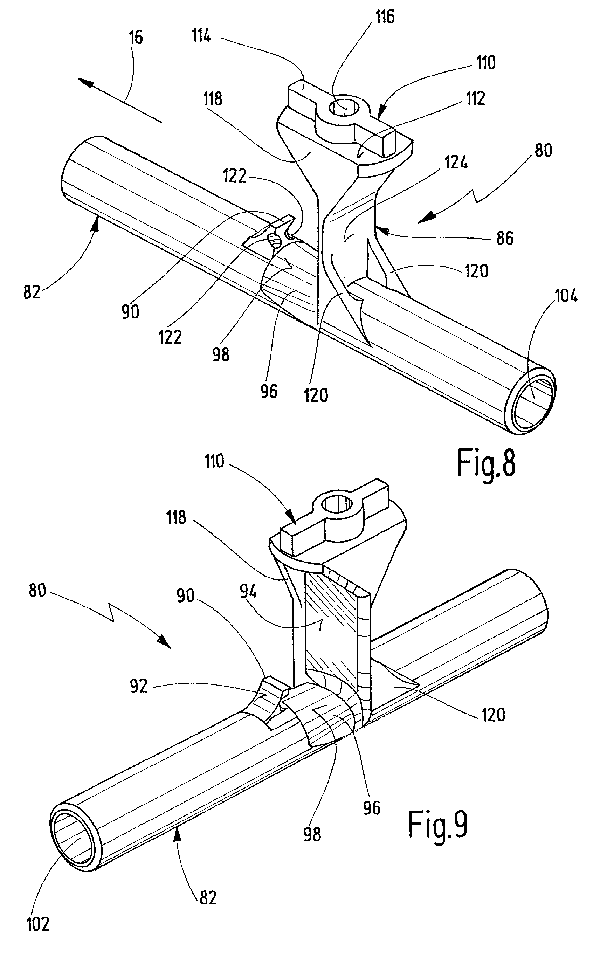

Am Befestigungssteg 86 ist eine Führungsfläche 94 vorgesehen, die gegenüber der Querrichtung (Z-Richtung) geneigt ist. Die Führungsfläche 94 kann, wie in Fig. 7 angedeutet, eine Vorzugsorientierung für das aufgenommene Verbindungselement 22 des Förderguts 20 definieren. An der Führungsfläche 94 kann das etwa als Bügel ausgestaltete Verbindungselement 22 zur Anlage kommen. Die in Fig. 7 gezeigte, leicht geneigte Vorzugsorientierung des Verbindungselements 22 kann sich vorteilhaft auf Ausschleusvorgänge in der Abgabestation 34 auswirken. Ferner kann sich das Erfassen der an den Verbindungselementen 22 angebrachten Identifikationselemente 78 (Fig. 4) mittels der Sensoreinrichtung 38 vereinfachen, wenn diese der Sensoreinrichtung 38 (Fig. 1) in der Vorzugsorientierung präsentiert werden. Die Orientierungsnase 90 und die Führungsfläche 94 des Befestigungsstegs 86 definieren einen Vorzugslagebereich 100, der sich zwischen ihnen erstreckt. Im Vorzugslagebereich 100 kann der Basiskörper 82 ferner eine Verjüngung 96 aufweisen, die etwa eine sich entgegen der Förderrichtung 16 verjüngende Konusfläche 98 umfasst, vgl. auch Fig. 7. Die Konusfläche 98 kann entlang eines Gesamtumfangs des Basiskörpers 82 ausgebildet sein. Wie in den Figuren 6 und 8 dargestellt, kann die Konusfläche 98 auch abschnittsweise am Umfang des Basiskörpers 82 ausgebildet sein. Die Konusfläche 98 kann demgemäß etwa ein Konussegment umfassen. Im Bereich eines Übergangs zwischen der Konusfläche 98 und der Leitfläche 92 kann sich das Verbindungselement 22 in der Vorzugsorientierung mit hoher Überdeckung an das Tragsegment 80 anschmiegen.

Wie in Fig. 5 dargestellt, kann das Fördergut 20 entlang des gesamten Auflagefensters 60 eingeschleust werden. Ein aufgenommenes Fördergut 20 kann etwa mittels Schwerkraft oder durch geeignete Einrichtungen entlang des Basiskörpers 82 bzw. des Ausgleichskörpers 84 in Richtung der Orientierungsnase 90 verlagert werden. Die Leitfläche 92 erlaubt es dem Verbindungselement 22 des Förderguts 20, die Orientierungsnase 90 entgegen der Förderrichtung 16 zu überwinden und in den Vorzugslagebereich 100 eingebracht zu werden. Im Vorzugslagebereich 100 ist das Fördergut 20 durch die Orientierungsnase 90 und die Führungsfläche 94 etwa auch dann hinreichend gesichert, wenn der Förderpfad 12 abschüssig oder ansteigend verläuft.

In Fig. 6 sind ferner mit 102 eine erste Ausnehmung, mit 104 eine zweite Ausnehmung und mit 106 ein Zwischenbereich des Basiskörpers 82 des Tragsegments 80 bezeichnet. Beispielhaft ist der Ausgleichskörper 84 in der zweiten Ausnehmung 104 aufgenommen. Der Ausgleichskörper 84 ist ferner dazu ausgebildet, mit der ersten Ausnehmung 102 des Basiskörpers 82 eines nachfolgenden Tragsegments 80 zusammenzuwirken. Die Ausnehmungen 102, 104 sind etwa rund oder zylinderförmig gestaltet. Allgemein können die Ausnehmungen 102, 104 ein (Innen-)Profil aufweisen, das an ein (Außen-)Profil des Ausgleichskörpers 84 angepasst ist. Der Ausgleichskörper 84 kann ferner in einer Weise auf die Ausnehmungen 102, 104 abgestimmt sein, die es ihm erlaubt, in der Längsrichtung (X-Richtung) zum Zweck des Längenausgleichs bzw. Lageausgleichs verschoben zu werden. In Fig. 6 ist eine Tiefe der Ausnehmungen 102, 104 mit B bzw. B' angedeutet. Unter Berücksichtigung einer Abmessung C des Zwischenbereichs 106 ergibt sich eine Länge A des Basiskörpers 82. Der Ausgleichskörper 84 weist eine Länge D auf.

Vorteilhaft sind die Längen A, B, B', C, D der beteiligten Komponenten derart gewählt, dass ein in den Ausnehmungen 102, 104 aufgenommener Ausgleichskörper 84 beim Durchfahren des Förderpfads 12 unter Berücksichtigung vorhandener Krümmungen und Kurven verliersicher zwischen den Basiskörpern 82 zweier Tragsegmente 80 aufgenommen ist. Daneben ist es ferner bevorzugt, wenn die Länge D des Ausgleichskörpers 84 derart an die Zwischenlänge L_{Z} und die Tiefen B, B' der Ausnehmungen 102, 104 angepasst ist, dass genügend Längsspiel für den Ausgleichskörper 84 verbleibt, um Ausgleichsschwenkbewegungen der Förderträger 18 kompensieren zu können. Ferner kann der elastische Ausgleichskörper 84 hinreichend biegsam gestaltet sein, um sich ergebende Schwenkwinkel zwischen den Tragsegmenten 80 nachvollziehen zu können. Es versteht sich gleichwohl, dass der Ausgleichskörper 84 hinreichend stabil ausgeführt ist, um ein in das Auflagefenster 60 eingebrachtes Fördergut 20 (zumindest zeitweise) aufnehmen zu können.

In den Figuren 8 und 9 ist ein Montageabschnitt 110 des Befestigungsstegs 86 sichtbar. Der Montageabschnitt 110 weist eine Passfläche 112 auf, die etwa im Wesentlichen eben sein kann und von unten in der Y-Richtung an dem Grundkörper 66 des Förderträgers 18 zur Anlage gelangen kann. Der Montageabschnitt 110 weist ferner einen Längssteg 114 auf, der bspw. in eine korrespondierende Längsnut oder Ausnehmung (nicht dargestellt) des Grundkörpers 66 eingreifen kann. Ferner ist am Montageabschnitt 110 eine Ausnehmung 116 vorgesehen, in die etwa das Verbindungselement 88 zur Verbindung mit dem Förderträger 18 eingreifen kann (Fig. 3). Der Befestigungssteg 86 weist ferner zumindest eine obere Übergangsrippe 118 und/oder zumindest eine untere Übergangsrippe 120 auf. Die Übergangsrippen 118, 120 vermeiden Spannungsspitzen beim Überleiten von Kräften bzw. Momenten zwischen dem Basiskörper 82, dem Befestigungssteg 86 sowie dem Grundkörper 66. Auf diese Weise genügt es, beim Tragsegment 80 lediglich einen Befestigungssteg 86 vorzusehen, ohne wesentliche Stabilitätseinbußen in Kauf nehmen zu müssen. Die in Fig. 8 gezeigten unteren Übergangsrippen 120 sind an eine Rückenfläche 124 angebunden, die an einer der Führungsfläche 94 gegenüberliegenden Seite des Befestigungsstegs 86 angeordnet ist.

An einer der Leitfläche 92 abgewandten Seite der Orientierungsnase 90 sind zwei Einkerbungen 122 vorgesehen, die etwa nach innen abgerundet sein können. Die Einkerbungen 122 können ein Abrutschen des Verbindungselements 22 (Fig. 7) verhindern, wenn dieses eine von einer senkrechten Orientierung gegenüber der Längsrichtung (X-Richtung) übermäßig abweichende Schrägstellung eingenommen hat. Ebenso können die Einkerbungen 122 etwa dazu ausgebildet sein, übermäßige Materialanhäufungen bei der Orientierungsnase 90 zu vermeiden.

## Patentansprüche

1. Tragsegment (80) zur Aufnahme an einem Förderträger (18) einer Förderanlage (10), mit einem Basiskörper (82), mit einem Ausgleichskörper (84), der am Basiskörper (82) aufgenommen ist, wobei der Ausgleichskörper (84) im Wesentlichen als Fortsatz das Basiskörpers (82) in seiner Erstreckung entlang einer Längsrichtung (X) gestaltet ist, wobei der Basiskörper (82) und der Ausgleichskörper (84) dazu ausgebildet sind, zumindest einem Verbindungselement (22) eines hängenden Fördergutes (20), vorzugsweise zumindest einem Haken, als Auflage zu dienen, mit einem einzigen Befestigungssteg (86) zur Verbindung des Basiskörpers (82) mit einem Förderträger (18), wobei sich der Befestigungssteg (86) ungefähr rechtwinklig zu der Längserstreckung des Basiskörpers (82) erstreckt, wobei der Ausgleichskörper (84) dazu ausgebildet ist, derart mit einem Basiskörper (82) eines weiteren Tragsegments (80) gekoppelt zu werden, dass sich zwischen den Befestigungsstegen (86) zweier gekoppelter Tragsegmente (80-1, 80-2) unter Einbeziehung des Ausgleichskörpers (84) ein einziges durchgängiges Auflagefenster (60) zur Aufnahme des zumindest einen Fördergutes (20) ergibt, **dadurch gekennzeichnet, dass** der Ausgleichskörper (84) elastisch ist, und dass der Befestigungssteg (86) dazu ausgestaltet ist, das Fördergut (20) in einer zu einer Querrichtung (Z) geneigten Vorzugsorientierung auszurichten, wobei der Befestigungssteg (86) eine gegenüber der Querrichtung (Z) geneigte Führungsfläche (94) aufweist, an der insbesondere das Verbindungselement (22) des Fördergutes (20) in der Vorzugsorientierung zur Anlage kommen kann.

2. Tragsegment (80) nach Anspruch 1, **dadurch gekennzeichnet, dass** am Basiskörper (82) ferner eine Orientierungsnase (90) vorgesehen ist, die in der Längsrichtung (X) dem Befestigungssteg (86) in einer Förderrichtung (16) vorgelagert ist, wobei die Orientierungsnase (90) und der Befestigungssteg (86) einen Vorzugslagebereich (100) für das zumindest eine Fördergut (20) definieren, vorzugsweise weist die Orientierungsnase (90) eine Leitfläche (92) auf, die gegenüber der Längsrichtung (X) geneigt ist.

3. Tragsegment (80) nach Anspruch 2, **dadurch gekennzeichnet, dass** der Basiskörper (82) im Vorzugslagebereich (100) eine Verjüngung (96) aufweist, die insbesondere eine sich entgegen der Förderrichtung (16) verjüngende Konusfläche (98) umfasst

4. Tragsegment (80) nach einem der vorhergehenden Ansprüche, **dadurch gekennzeichnet, dass** der Befestigungssteg (86) zumindest eine obere Übergangsrippe (118) und zumindest eine untere Übergangsrippe (120) aufweist.

5. Tragsegment (80) nach einem der vorhergehenden Ansprüche, **dadurch gekennzeichnet, dass** der Ausgleichskörper (84) etwa stabförmig ausgebildet ist und in einer Ausnehmung (102; 104) des Basiskörpers (82) aufgenommen ist, wobei ein freies Ende des Ausgleichskörpers (84) in eine korrespondierende Ausnehmung (102; 104) eines weiteren Basiskörpers (82) einführbar ist.

6. Tragsegment (80) nach einem der vorhergehenden Ansprüche, **dadurch gekennzeichnet, dass** der Basiskörper (82) und der Befestigungssteg (86) aus einem Kunststoffwerkstoff, insbesondere einem thermoplastischen Werkstoff, gefertigt sind und insbesondere einstückig ausgeführt sind.

7. Tragsegment (80) nach einem der vorhergehenden Ansprüche, **dadurch gekennzeichnet, dass** der Ausgleichskörper (84) aus einem elastischen, insbesondere einem elastomeren Werkstoff hergestellt ist.

8. Förderträger (18), insbesondere Zugstangenträger, **gekennzeichnet durch** ein Tragsegment (80) nach einem der vorhergehenden Ansprüche, wobei der Förderträger (18) einen Grundkörper (66) aufweist, der sich im Wesentlichen in der Längsrichtung (X) erstreckt, wobei der Grundkörper (66) einem ersten Koppelabschnitt (68a) und einem zweiten Koppelabschnitt (68b) aufweist, wobei der erste Koppelabschnitt (68a) und der zweite Koppelabschnitt (68b) dazu ausgebildet sind, jeweils mit einem Führungsgelenk (46) zusammenwirken, das mit einem weiteren Förderträger (18) koppelbar ist.

9. Förderträger (18) nach Anspruch 8, **dadurch gekennzeichnet, dass** das Tragsegment (80) lösbar am Grundkörper (66) aufgenommen ist, vorzugsweise etwa mittig, und wobei der Grundkörper (66) und der Basiskörper (82) des Tragsegments (80) im Wesentlichen parallel zueinander ausgerichtet sind.

10. Förderträger nach Anspruch 8 oder 9,**dadurch gekennzeichnet, dass** am Grundkörper (66) ein vorzugsweise seitlicher Mitnahmeabschnitt (76) vorgesehen ist, an dem eine Antriebseinrichtung (24) zum Vortrieb des Förderträgers (18) angreifen kann.

11. Förderkette (14) für eine Förderanlage (10), insbesondere Zugstangenkette, zum Transport von hängenden Fördergütern (20), insbesondere von an Haken aufgenommenen Fördergütern (20), **gekennzeichnet durch** einen Förderträger (18-1) nach einem der vorhergehenden Ansprüche 8 bis 10, der mit zumindest einem weiteren Förderträger (18-2) gekoppelt ist, wobei zwischen zwei gekoppelten Förderträgern (18-1, 18-2) jeweils ein Führungsgelenk (46) vorgesehen ist, insbesondere ein kardanisches Führungsgelenk (46), dass an einer Führungsschiene (44) einer Förderanlage (10) gelagert ist.

12. Förderkette (14) nach Anspruch 11, **dadurch gekennzeichnet, dass** die Förderträger (18) eine Gesamtlänge (L_{G}) aufweisen, die derart an eine Länge (A) der Basiskörper (82) und eine Länge (D) der Ausgleichskörper (84) der Tragsegmente (80-1, 80-2) angepasst ist, dass in der Förderkette (14) jeweils ein Ausgleichskörper (84) zwischen zwei Basiskörpern (82) aufgenommen ist und zum Toleranzausgleich zumindest einseitig in der Längsrichtung (X) verschieblich gelagert ist.

13. Förderkette (14) nach einem der Ansprüche 11 oder 12, **dadurch gekennzeichnet, dass** die Auflagefenster (60), die sich zwischen jeweils zwei gekoppelten Tragsegmenten (80-1, 80-2) ergeben, eine Länge (L_{A}) aufweisen, die zumindest 75%, vorzugsweise mindestens 85%, weiter bevorzugt mindestens 95% der Gesamtlänge (L_{G}) beträgt, die ein gekoppelter Förderträger (18) beansprucht.

14. Förderkette (14) nach einem der Ansprüche 12 oder 13, **dadurch gekennzeichnet, dass** der Ausgleichskörper (84), insbesondere beim Durchfahren stark gekrümmter Förderpfade (12), verliersicher zwischen den beiden Basiskörpern (82) aufgenommen ist, die durch diesen gekoppelt sind.

15. Förderanlage (10), insbesondere Hängeförderanlage, zum Transport hängender Fördergüter, die folgendes ausweist:
- einen Förderpfad (12) mit zumindest einer Führungsschiene (44);
- eine Förderkette (14) nach einem der Ansprüche 11 bis 14, mit einer Mehrzahl von Förderträgern (18) mit Tragsegmenten (80), die unter Ausbildung durchgängiger Auflagefenster (60) an der Führungsschiene (44) aufgenommen sind; und
- zumindest einer Antriebseinrichtung (24) zum Vortrieb der Förderträger (18), wobei die Antriebseinrichtung (24) vorzugsweise als im Wesentlichen reibschlüssiger Antrieb, insbesondere als Reibrollenantrieb ausgestaltet ist.

## Claims

1. Supporting segment (80) for receiving on a conveyor carrier (18) of a conveyor system (10), comprising a base body (82), a compensating body (84) which is received at the base body (82), wherein the compensating body (84) is substantially arranged as an extension of the base body in its extension along a longitudinal direction (X), wherein the base body (82) and the compensating body (84) are arranged to serve as a support for at least one connecting element (22) of a hanging to-be-conveyed good (20), preferably for at least one hook, and a single mounting tab (86) for connecting the base body (82) to a conveyor carrier (18), wherein the mounting tab (86) extends approximately perpendicular to the longitudinal extension of the base body (82), wherein the compensating body (84) is configured for being coupled with a base body (82) of a further support segment (80) in such a way that between the mounting tabs (86) of two coupled support segments (80-1, 80-2), involving the compensating body (84), a single continuous support window (60) for receiving the at least one to-be-conveyed good (20) is formed, **characterized in that** the compensating body (84) is elastic, and that the mounting tab (86) is arranged for aligning the to-be-conveyed good (20) in a preferred orientation which is inclined with respect to a transverse direction (Z), wherein the mounting tab (86) comprises a guide surface (94) which is inclined with respect to the transverse direction (Z), wherein particularly the connecting element (22) of the to-be-conveyed good (20) may abut the guide surface (94) in the preferred orientation.

2. Supporting segment (80) according to claim 1, **characterized in that** the base body (82) is further provided with an orientation lug (90) which is, in the longitudinal direction (X), arranged in front, with respect to the conveying direction (16), of the mounting tab (86), wherein the orientation lug (90) and the mounting tab (86) define a preferred orientation area (100) for the at least one to-be-conveyed good (20), and wherein the orientation lug (90) preferably comprises a guiding surface (92) which is inclined with respect to the longitudinal direction (X).

3. Support segment (80) according to claim 2, **characterized in that** the base body (82) comprises a tapering (96) in the preferred orientation area (100) which particularly involves a conical surface (98) which is tapered in a fashion opposite to the conveying direction (16).

4. Support segment (80) according to any of the preceding claims, **characterized in that** the mounting tab (86) comprises at least one upper transition rib (118) and at least one lower transition rib (120).

5. Support segment (80) according to any of the preceding claims, **characterized in that** the compensating body (84) is arranged in a basically rod-shaped fashion and received in a recess (102; 104) of the base body (82), wherein a free end of the compensating body (84) is arranged to be inserted in a corresponding recess (102; 104) of a further base body (82).

6. Support segment (80) according to any of the preceding claims, **characterized in that** the base body (82) and the mounting tab (86) are made of a plastic material, particularly a thermoplastic material, and are particularly arranged in an integral fashion.

7. Support segment (80) according to any of the preceding claims, **characterized in that** the compensating body (84) is made of an elastic material, particularly an elastomer material.

8. Conveyor carrier (18), particularly drawbar carrier, **characterized by** a support segment (80) according to any of the preceding claims, wherein the conveyor carrier (18) comprises a basic body (66) which extends substantially in the longitudinal direction (X) wherein the basic body (66) comprises a first coupling section (86a) and a second coupling section (86b), wherein the first coupling section (86a) and the second coupling section (86b) are arranged to cooperate with a respective guide joint (46) which is arranged to be coupled with a further conveyor carrier (18).

9. Conveyor carrier (18) according to claim 8, **characterized in that** the support segment (80) is received at the basic body (66) in a releasable fashion, preferably at an approximately central position, and wherein the basic body (66) and the base body (82) of the support segment (80) are aligned in a fashion substantially parallel to one another.

10. Conveyor carrier according to claim 8 or 9, **characterized in that** an entrainment section (76), preferably a lateral entrainment section, is provided at the basic body (66), wherein a driving unit (24) may engage the entrainment section (76) for propelling the conveyor carrier (18).

11. Conveyor chain (14) for a conveyor system (10), particularly a drawbar chain, for transporting hanging to-be-conveyed goods (20), particularly to-be-conveyed goods (20) which are received on hooks, **characterized by** a conveyor carrier (18-1) according to any of the preceding claims 8 to 10, wherein the conveyor carrier (18-1) is coupled with at least a further conveyor carrier (18-2), wherein a guide joint (46) is respectively provided between two coupled conveyor carriers (18-1, 18-2), particularly a universal guide joint (46) which is mounted on a guide rail (44) of a conveyor system (10).

12. Conveyor chain (14) according to claim 11, **characterized in that** the conveyor carriers (18) comprise a total length (L_{G}) which is adapted to a length (A) of the base body (82) and a length (D) of the compensating body (84) of the support segments (80-1, 80-2) in such a way that, in the conveyor chain (14), a compensating body (84) is respectively received between two base bodies (82) and, for tolerance compensation, at least at one end received in a fashion slidable in the longitudinal direction (X).

13. Conveyor chain (14) according to any of the claims 11 or 12, **characterized in that** the receiving windows (60) which are respectively formed between two coupled support segments (80-1, 80-2) comprise a length (L_{A}) which is at least 75 %, preferably at least 85 %, further preferred at least 95 % of the total length (L_{G}) occupied by a coupled conveyor carrier (18).

14. Conveyor chain (14) according to any of the claims 12 or 13, **characterized in that** the compensating body (84) is received, particularly when being moved along strongly curved conveying paths (12) in a loss-proof fashion between the two base bodies (82) which are coupled via the compensating body (84).

15. Conveyor system (10), particularly overhead conveyor system, for transporting hanging to-be-conveyed goods, comprising:
- a conveying path (12) comprising at least one guide rail (44);
- a conveyor chain (14) according to any of the claims 11 to 14, comprising a plurality of conveyor carriers (18) comprising support segments (80) which are received at the guide rail (44) and thereby form continuous receiving windows (60); and
- at least one drive unit (24) for propelling the conveyor carriers (18), wherein the drive unit (24) is preferably arranged as a substantially friction-based drive, particularly as a friction roller drive.

## Revendications

1. Segment de transport (80) pouvant être reçu au niveau d'un support de transport (18) d'une installation de transport (10), avec un corps de base (82), avec un corps d'équilibrage (84) reçu au niveau du corps de base (82), le corps d'équilibrage (84) étant agencé pour l'essentiel sous la forme d'un prolongement du corps de base (82) dans son prolongement le long d'une direction longitudinale (X), le corps de base (82) et le corps d'équilibrage (84) étant réalisés pour servir d'appui à au moins un élément de liaison (22) d'un bien transporté (20) accroché, de préférence à au moins un crochet, avec un étai de fixation (86) unique pour relier le corps de base (82) à un support de transport (18), l'étai de fixation (86) s'étendant approximativement à angle droit par rapport au prolongement longitudinal du corps de base (82), le corps d'équilibrage (84) étant réalisé pour être couplé de telle sorte à un corps de base (82) d'un autre segment de transport (80) qu'une fenêtre d'appui (60) traversante unique est obtenue pour recevoir au moins un bien transporté (20) entre les étais de fixation (86) de deux segments de transport (80-1, 80-2) couplés, par inclusion du corps d'équilibrage (84), **caractérisé en ce que** le corps d'équilibrage (84) est élastique et que l'étai de fixation (86) est configuré pour orienter le bien de transport (20) dans une orientation d'avancée inclinée par rapport à une direction transversale (Z), l'étai de fixation (86) comportant une surface de guidage (94) inclinée par rapport à la direction transversale (Z) au niveau de laquelle l'élément de liaison (22) du bien transporté (20) peut notamment s'appuyer dans l'orientation d'avancée.

2. Segment de transport (80) selon la revendication 1, **caractérisé en ce qu'**un bec d'orientation (90) est en outre prévu au niveau du corps de base (82), ledit bec étant disposé en amont de l'étai de fixation (86), dans la direction longitudinale (X), dans une direction de transport (16), le bec d'orientation (90) et l'étai de fixation (86) définissant une zone de position d'avancée (100) pour l'au moins un bien de transport (20), le bec d'orientation (90) comportant de préférence une surface conductrice (92) inclinée par rapport à la direction longitudinale (X).

3. Segment de transport (80) selon la revendication 2, **caractérisé en ce que** le corps de base (82) comporte dans la zone de position d'avancée (100) un rétrécissement (96) comprenant notamment une surface conique (98) se rétrécissant à l'encontre de la direction de transport (16).

4. Segment de transport (80) selon l'une quelconque des revendications précédentes, **caractérisé en ce que** l'étai de fixation (86) comporte au moins une nervure de transition (118) supérieure et au moins une nervure de transition (120) inférieure.

5. Segment de transport (80) selon l'une quelconque des revendications précédentes, **caractérisé en ce que** le corps d'équilibrage (84) prend approximativement une forme de tige et est reçu dans un évidement (102 ; 104) du corps de base (82), une extrémité libre du corps d'équilibrage (84) pouvant être introduite dans un évidement (102 ; 104) correspondant d'un corps de base (82) supplémentaire.

6. Segment de transport (80) selon l'une quelconque des revendications précédentes, **caractérisé en ce que** le corps de base (82) et l'étai de fixation (86) sont fabriqués en matière plastique, notamment en matière thermoplastique et sont notamment réalisés d'un seul tenant.

7. Segment de transport (80) selon l'une quelconque des revendications précédentes, **caractérisé en ce que** le corps d'équilibrage (84) est fabriqué à partir d'une matière élastique, notamment élastomère.

8. Support de transport (18), notamment support de tringle de traction, **caractérisé par** la présence d'un segment de transport (80) selon l'une quelconque des revendications précédentes, le support de transport (18) comportant un corps de base (66) s'étendant pour l'essentiel dans la direction longitudinale (X), le corps de base (66) comportant une première section de couplage (68a) et une deuxième section de couplage (68b), la première section de couplage (68a) et la deuxième section de couplage (68b) étant réalisées pour interagir respectivement à une articulation de guidage (46), ladite articulation pouvant être couplée à un support de transport (18) supplémentaire.

9. Support de transport (18) selon la revendication 8, **caractérisé en ce que** le segment de transport (80) est reçu de façon amovible au niveau du corps de base (66), de préférence quelque peu de façon centrale et le corps de base (66) et le corps de base (82) du segment de transport (80) étant alignés pour l'essentiel parallèlement l'un par rapport à l'autre.

10. Support de transport selon la revendication 8 ou 9, **caractérisé en ce qu'**une section de préhension (76) latérale est prévue de préférence au niveau du corps de base (66) au niveau duquel un dispositif d'entraînement (24) peut être entraîné pour pré-impulser le support de transport (18).

11. Chaîne de transport (14) pour une installation de transport (10), notamment de chaîne de barre de traction, pour transporter les biens transportés (20) accrochés, notamment des biens transportés (20) reçus au niveau du crochet, **caractérisée par** un support de transport (18-1) selon l'une quelconque des revendications 8 à 10, couplé à au moins un support de transport (18-2) supplémentaire, une articulation de guidage (46) étant respectivement prévue entre deux supports de transport (18-1, 18-2) couplés, notamment une articulation de guidage (46) à cardan, disposée au niveau d'un rail de guidage (44) d'une installation de transport (10).

12. Chaîne de transport (14) selon la revendication 11, **caractérisée en ce que** le support de transport (18) présente une longueur totale (L_{G}) adaptée de telle sorte à une longueur (A) du corps de base (82) et une longueur (D) du corps d'équilibrage (84) des segments de transport (80-1, 80-2), que respectivement un corps d'équilibrage (84) est reçu entre deux corps de base (82) dans la chaîne de transport (14) et est disposé de façon coulissante pour équilibrer la tolérance au moins unilatéralement dans la direction longitudinale (X).

13. Chaîne de transport (14) selon l'une quelconque des revendications 11 ou 12, **caractérisée en ce que** les fenêtres d'appui (60) sont obtenues entre respectivement deux segments de transport (80-1, 80-2) couplés, présentant une longueur (L_{A}) d'au moins 75 %, de préférence d'au moins 85 %, de façon davantage préférée d'au moins 95 % de la longueur totale (L_{G}) réclamée par un support de transport (18) couplé.

14. Chaîne de transport (14) selon l'une quelconque des revendications 12 ou 13, **caractérisée en ce que** le corps d'équilibrage (84), est reçu de façon à éviter de façon sûre toute perte entre les deux corps de base (82), notamment par passage à travers des ornières de transport (12) fortement coudées, lesdits corps étant couplés à travers lui.

15. Installation de transport (10), notamment installation de transport par accrochage, pour transporter des biens transportés accrochés, comportant les éléments suivants :
- une ornière de transport (12) avec au moins un rail de guidage (44) ;
- une chaîne de transport (14) selon l'une quelconque des revendications 11 à 14, avec une pluralité de supports de transport (18) dotés de segments de transport (80) logés par formation de fenêtres d'appui (60) traversantes au niveau du rail de guidage (44) ; et
- au moins un dispositif d'entraînement en entrée (24) pour impulser en avant le support de transport (18), le dispositif d'entraînement (24) étant de préférence réalisé sous la forme d'un entraînement réalisé pour l'essentiel par complémentarité de frottements, notamment sous la forme d'un entraînement à rouleau de frottement.
